# FASCICULE DE BREVET EUROPEEN

(11) **EP 1 419 610 B1**
(45) Date de publication et mention de la délivrance du brevet: **02.12.2009**
(21) Numéro de dépôt: 02794820.7
(22) Date de dépôt: 16.08.2002
(51) Int. Cl.: H04L 9/30

(54) **PROCEDE DE REALISATION D'UNE UNITE CRYPTOGRAPHIQUE POUR UN SYSTEME DE CRYPTOGRAPHIE ASYMETRIQUE UTILISANT UNE FONCTION LOGARITHME DISCRET**
VERFAHREN ZUR HERSTELLUNG EINER KRYPTOGRAPHISCHEN EINHEIT FÜR EIN ASYMMETRISCHES KRYPTOGRAPHISCHES SYSTEM UNTER VERWENDUNG EINER DISKRETEN LOGARITHMUSFUNKTION
METHOD OF PRODUCING A CRYPTOGRAPHIC UNIT FOR AN ASYMMETRIC CRYPTOGRAPHIC SYSTEM USING A DISCRETE LOGARITHM FUNCTION

(30) Priorité: 20.08.2001 FR 0110938
(43) Date de publication de la demande: 19.05.2004
(73) Titulaire: FRANCE TELECOM, 75015 Paris (FR)
(72) Inventeur: GIRAULT, Marc, F-14000 Caen (FR)
(74) Mandataire: Loisel, Bertrand
(86) Numéro de dépôt international: PCT/FR2002/002896
(87) Numéro de publication internationale: WO 2003/017569

(56) Documents cités:
- EP-A- 0 666 664
- US-A- 5 966 445
- SCHNORR C P: "EFFICIENT IDENTIFICATION AND SIGNATURES FOR SMART CARDS" LECTURE NOTES IN COMPUTER SCIENCE, SPRINGER VERLAG, NEW YORK, NY, US, 20 août 1989 (1989-08-20), pages 239-252, XP002052048 ISSN: 0302-9743

## Description

La présente invention relève du domaine technique de la cryptographie, et plus précisément de la cryptographie dite à asymétrique ou à clé publique.

Dans ce type de cryptographie, chaque utilisateur détient une paire de clés pour un usage donné, constituée d'une clé secrète et d'une clé publique associée.

Par exemple, s'il s'agit d'une paire de clés dédiée à la confidentialité, alors la clé publique est utilisée pour chiffrer les données, tandis que la clé secrète est utilisée pour les déchiffrer, c'est-à-dire pour rétablir ces données en clair. S'il s'agit d'une paire de clés dédiée à l'authenticité des données, alors la clé secrète est utilisée pour signer numériquement les données, tandis que la clé publique est utilisée pour vérifier la signature numérique. D'autres usages (authentification d'entité, échange de clés etc.) sont possibles.

La cryptographie à clé publique est d'une grande utilité dans la mesure où, contrairement à la cryptographie à clé secrète, elle n'exige pas que les interlocuteurs partagent un même secret afin d'établir une communication sécurisée. Cependant, cet avantage en termes de sécurité s'accompagne d'un désavantage en termes de performance, car les procédés de cryptographie à clé publique (appelés encore « schémas à clé publique ») sont, à ressources égales, souvent cent ou mille fois plus lents que les procédés de cryptographie dite à clé secrète (appelés encore « schémas à clé secrète »). Il en résulte, pour obtenir des temps de calcul raisonnables, que le coût des circuits mettant en oeuvre ces algorithmes est souvent très élevé.

C'est particulièrement vrai du schéma de chiffrement et de signature numérique dit RSA (voir R.L. Rivest, A. Shamir et L.M. Adleman, « A Method for Obtaining Digital Signatures and Public-Key Cryptosystems », Communications of the ACM, Vol. 21, n° 2, pp. 120-126, février 1978). Ce schéma repose sur la difficulté du problème de la factorisation des entiers : étant donné un grand entier (typiquement plus de 1000 bits dans sa représentation en base 2) égal au produit de deux ou plusieurs facteurs premiers de tailles comparables, il n'existe pas de méthode efficace pour retrouver ces facteurs premiers. Les calculs effectués dans ce schéma portent donc sur des nombres très grands. Ils ne peuvent être effectués en moins d'une seconde sur une carte à puce que si cette dernière est dotée d'un co-processeur cryptographique spécialisé, qui en augmente considérablement le coût. De plus, comme l'efficacité des méthodes de factorisation s'accroît assez rapidement avec le temps, les longueurs de clés doivent être souvent révisées à la hausse, au détriment des performances.

La question de réduire le coût des puces mettant en oeuvre des schémas à clé publique se pose donc.

Il y a principalement deux approches pour aborder cette question. La première consiste à spécifier de nouveaux schémas cryptographiques, de préférence (mais pas nécessairement) basés sur des problèmes autres que la factorisation, qui permettent d'accélérer de façon significative les temps de calcul. Cette voie est très explorée, et a donné lieu à de nombreux résultats. Cependant, dans la très grande majorité des cas, ou bien l'amélioration par rapport au RSA n'est pas assez significative pour en envisager le remplacement, ou bien la sécurité n'est pas suffisamment bien établie.

La seconde approche consiste à fabriquer des puces en telle quantité que leur coût diminue dans de grandes proportions. C'est peut-être ce qui se produira avec le RSA si les organismes bancaires internationaux confirment le choix de ce schéma pour les futures cartes bancaires à puce. Cependant, le coût d'une puce RSA est à l'origine tellement élevé qu'il restera toujours substantiel, quel que soit le nombre de puces fabriquées.

On notera que beaucoup de schémas cryptographiques à clé publique ont en commun d'utiliser comme opérations de base des opérations sur des entiers, telles que des multiplications modulaires (ab (modulo n)), des divisions modulaires (a/b (modulo n)), ou encore des exponentiations modulaires (a^{b} (modulo n)), où a, b et n sont des entiers. Cependant, ces opérations ne sont jamais exactement les mêmes. En conséquence, chaque fois que le schéma cryptographique est modifié il faut changer le programme ou le circuit du dispositif de sécurité qui effectue les calculs cryptographiques.

La présente invention a pour but de diminuer le coût des unités cryptographiques à clés publiques en combinant les deux approches ci-dessus.

L'invention propose ainsi un procédé de réalisation d'une unité cryptographique associée à une clé secrète entière s dans un système de cryptographie asymétrique, dans lequel on équipe l'unité cryptographique d'un composant réalisé indépendamment du système de cryptographie et adapté pour délivrer un entier y par une combinaison entre plusieurs opérandes entiers incluant un nombre aléatoire r, la clé secrète s et au moins un opérande supplémentaire (a, b). Après avoir sélectionné le système de cryptographie, en associant à la clé secrète s une clé publique comprenant au moins un élément g d'un ensemble G muni d'une opération de multiplication, on équipe l'unité cryptographique d'un générateur de jeux de données cryptographiques comprenant chacun un nombre aléatoire r soumis comme opérande audit composant et une valeur x dépendant de l'élément g^{r} de l'ensemble G, délivrée par l'unité en association avec l'entier y.

Le composant, qui peut consister en une ou plusieurs portions de circuit ou en un ou plusieurs modules logiciels, applique une composante cryptographique de base très rapide à exécuter, qui peut avantageusement être commune à un nombre élevé de schémas cryptographiques différents : schémas d'authentification, de signature, d'échange de clés etc., utilisant des objets mathématiques divers (ensembles G et opérations de multiplication permettant de définir une variété de fonctions logarithme discret).

Le fait que ce composant soit commun à un nombre élevé de schémas permet d'amortir mieux les coûts de développement et de fabrication industriels. On peut avantageusement produire en très grande quantité des unités génériques (par exemple des cartes à puce) munies du composant, sachant que ces unités seront adaptées à tous les schémas de la famille considérée et qu'elles permettront le plus souvent d'atteindre les performances exigées par telle ou telle application.

Plus particulièrement, la clé publique comprend de plus un élément v de l'ensemble G tel que v = g^{s} ou v = g^{-s}. Le procédé donne lieu à des unités cryptographiques pouvant appliquer toute une famille de schémas fondés sur le problème du logarithme discret généralisé. Ce problème peut être énoncé dans sa généralité de la façon suivante : soit G un ensemble muni d'une opération de multiplication (c'est-à-dire d'une fonction qui, à deux éléments a et b, associe un élément noté « a.b », ou simplement « ab », appelé produit de a et b), g un élément de G, u un (grand) entier et w l'élément de G défini par : w = g^{u} (c'est-à-dire le produit gg...g avec u occurrences de g) ; alors il est impossible en pratique de retrouver u à partir de g et w.

Le brevet européen 0 666 664 décrit un exemple de schéma de signature électronique de ce type, où G est l'ensemble des entiers aux moins égaux à 0 et plus petits que n, et l'opération de multiplication est le produit usuel entre entiers, modulo n.

Avec le procédé selon l'invention, s'il advient que, pour un ensemble G donné et une certaine opération de multiplication, on découvre des algorithmes de calcul de logarithme discret beaucoup plus efficaces que ceux précédemment connus, alors il suffit de changer l'ensemble dans lequel les calculs sont effectués et/ou l'opération de multiplication pour retrouver le niveau de sécurité voulu.

Le problème du logarithme discret peut être a priori énoncé dans tout ensemble muni d'une opération. Cependant, afin que le calcul d'une exponentielle puisse être effectué en un temps court et fournir un résultat de petite taille, certaines propriétés sont requises, de sorte qu'actuellement les ensembles les plus appropriés sont des groupes. Entre autres propriétés, un groupe contient toujours un élément neutre, c'est-à-dire un élément noté ε (ou simplement 1) tel que les produits ε.a et a.ε sont tous deux égaux à a, et ce pour n'importe quel élément a. De plus, tout élément a possède dans le groupe un inverse noté a⁻¹, c'est-à-dire un élément tel que les produits a⁻¹.a et a.a⁻¹ soient tous deux égaux à ε. Des exemples typiques de groupes utilisés en cryptographie sont les anneaux ou corps d'entiers et les courbes elliptiques.

On peut ainsi définir un composant cryptographique qui ne dépende en aucune manière du groupe considéré ou plus généralement de l'ensemble G considéré. Cela implique en premier lieu que ce composant n'agisse pas sur des éléments de l'ensemble lui-même. Cela implique également qu'il ne dépende pas de caractéristiques du groupe ni de l'élément g considéré, en particulier de l'ordre de g dans G, c'est-à-dire du plus petit entier non nul q (s'il existe) vérifiant g^{q} = ε.

Dans une réalisation préférée de l'invention, la combinaison opérée par le composant est uniquement constituée d'un petit nombre d'additions, de soustractions et de multiplications entre des entiers, dont aucun n'a de lien avec les caractéristiques de G et de g. En particulier, cette combinaison peut être de la forme y = ar + bs, où a et b sont deux opérandes entiers supplémentaires. Une simplification consiste encore à prendre a = 1 ou b =1.

Un avantage de ce choix d'un tel composant est sa rapidité : s'il n'y a que peu de multiplications à effectuer (une ou deux), le composant sera de grande rapidité (quelques millisecondes) et pourra être incorporé dans tout environnement, notamment dans une carte à microprocesseur à bas coût.

On pourra constituer le générateur de jeux de données cryptographiques en associant un générateur de nombres aléatoires à un module de calcul d'exponentielles sur l'ensemble G.

Mais dans la réalisation préférée du procédé, le générateur de jeux de données cryptographiques comporte une mémoire programmable pour recevoir des couples {r, x} ou {r, g^{r}} calculés à l'avance. De cette façon, l'unité cryptographique peut être réalisée dans son intégralité de façon indépendante de l'ensemble G et de l'opération de multiplication qui sont retenus. Il ne reste plus qu'à écrire la clé secrète s et un certain nombre de couples {r, x} ou {r, g^{r}} calculés à l'avance dans la mémoire programmable. En fonctionnement, le composant commun réalisera le seul calcul requis au niveau de l'unité cryptographique.

Le fait que l'unité puisse ainsi être utilisée de manière autonome permet d'améliorer encore l'amortissement des coûts de développement et de fabrication puisque le même circuit (et non plus seulement la même partie de circuit) pourra être utilisé dans diverses applications visées. De plus, le fait que le composant soit d'exécution très rapide permet de l'implanter dans des circuits à très bas coût, et donc, en mode autonome, dans des unités très peu chères telles que des cartes à microprocesseurs standards, avec ou sans contacts.

Un avantage supplémentaire de cette autonomie est la possibilité de pouvoir changer le schéma cryptographique, par exemple parce que ce dernier serait cassé (c'est-à-dire que des attaques auraient été trouvées qui réduiraient considérablement le niveau de sécurité qu'il fournit), sans avoir à développer et fabriquer un autre circuit, avec les gains en productivité qui en résultent.

Si, de surcroît, l'unité utilise une valeur x dont la longueur n'est pas destinée à varier avec le temps (par exemple parce que son calcul à partir de g^{r} fait intervenir une fonction de hachage prédéfinie), alors on peut aussi, tout en conservant le même schéma, changer les longueurs des autres clés utilisées sans avoir à développer et fabriquer un autre circuit.

De plus, dans ces deux dernières situations, non seulement il n'y pas lieu de développer et fabriquer un autre circuit, mais, si ce dernier est conçu de manière adéquate, il n'y a même pas lieu de changer les dispositifs de sécurité (par exemple les cartes à puce) qui les contiennent, même après que ces dispositifs ont été déployés. Cet avantage est très important car le fait de changer le circuit ou le programme d'un circuit dans un dispositif de sécurité déjà en circulation (ou encore le dispositif de sécurité lui-même) est toujours une opération très coûteuse.

L'invention peut être avantageusement utilisée par les fabricants de semi-conducteurs produisant des puces sécurisées, les industriels fabriquant des dispositifs de sécurité à partir de ces puces, tels que des encarteurs (cartes à puce avec ou sans contacts), et les organismes (banques, opérateurs de télécommunications, transporteurs, etc.) déployant de tels dispositifs, pour lesquels le remplacement des unités cryptographiques induit un coût élevé de développement, de fabrication, de gestion ou de maintenance.

En résumé, l'invention donne lieu à une famille de schémas de cryptographie à clé publique utilisant le problème du logarithme discret, dans laquelle l'une des entités effectue un calcul constitué au plus d'un petit nombre d'additions, de soustractions et de multiplications d'entiers, ce calcul étant commun à tous les schémas de la famille. Ce calcul représente de préférence l'essentiel des calculs à effectuer par cette entité, car l'essentiel des autres calculs peut être effectué à l'avance.

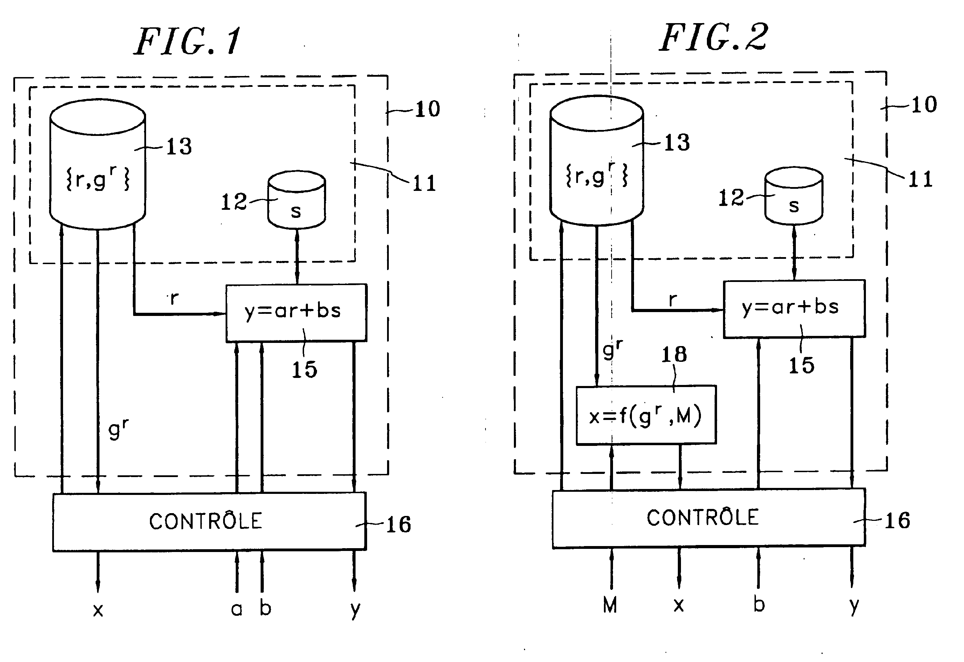

D'autres particularités et avantages de la présente invention apparaîtront dans la description ci-après d'exemples de réalisation non limitatifs, en référence aux dessins annexés, dans lesquels les figures 1 à 4 sont des schémas synoptiques d'unités cryptographiques réalisées conformément à l'invention.

On considère ci-après une famille de protocoles d'authentification d'entité, avec extensions à l'authentification de messages et à la signature numérique de messages, et de protocoles d'échange de clés mettant tous en oeuvre un composant commun. L'authenticité d'une clé publique d'une entité A utilisée par une autre entité B, est supposée avoir été préalablement vérifiée par cette entité B.

Soit G un ensemble muni d'une opération de multiplication et g un élément de G. La clé secrète de l'entité A est un entier s. Il est à noter que la taille de cet entier s (nombre de bits de sa décomposition en base 2) est indépendante de G et de g. La clé publique associée à s pour l'entité A est le couple {g, v}, où v = g^{s}.

Dans un exemple de réalisation de l'invention, l'authentification de l'entité A par l'entité B se déroule comme suit :
1. A choisit au hasard un entier r, calcule x = g^{r} et envoie x à B ;
2. B choisit au hasard deux opérandes entiers a et b et les envoie à A ;
3. A calcule y = ar + bs et envoie y à B.
4. B vérifie que g^{y} = x^{a}v^{b}_{.}

Beaucoup de variantes de ce protocole de base sont possibles, ainsi que son adaptation à l'authentification de message et à la signature numérique de message :
- on peut fixer par avance a ou b à une valeur non nulle (par exemple a = 1), auquel cas cet opérande n'a pas besoin d'être transmis et la combinaison y = ar + bs ne comporte plus qu'une multiplication ;
- on peut remplacer y = ar + bs par y = ar - bs et l'équation de vérification par : g^{y}v^{b} = x^{a} ;
- on peut remplacer y = ar + bs par y = bs - ar et l'équation de vérification par : g^{y}x^{a} = v^{b} ;
- on peut remplacer y = ar + bs par y = - ar - bs et l'équation de vérification par : g^{y}x^{a}v^{b} = 1 ;
- si G est un groupe, on peut inverser le signe de la clé secrète s, c'est-à-dire prendre v = g^{-s} = (g^{s})⁻¹, auquel cas l'équation de vérification devient : g^{y}v^{b} = x^{a} ; ce choix peut bien sûr être combiné avec l'une quelconque des variations précédentes ;
- dans chaque cas où l'équation de vérification est de la forme g^{y}v^{b} = x, ce qui suppose a = 1, on peut remplacer x = g^{r} par x = f(g^{r}), où f est une fonction, par exemple égale à (ou incluant) une fonction de hachage cryptographique ; l'équation de vérification devient alors : f(g^{y}v^{b}) = x ;
- dans chaque cas encore où l'équation de vérification est de la forme g^{y}v^{b} = x, ce qui suppose a = 1, si M est un message à certifier par A, on peut remplacer x = g^{r} par x = f(g^{r}, M), où f est une fonction, par exemple égale à (ou incluant) une fonction de hachage cryptographique ; l'équation de vérification devient alors : f(g^{y}v^{b}, M) = x ; le protocole obtenu est un protocole d'authentification de message ;
- dans chaque cas encore où l'équation de vérification est de la forme g^{y}v^{b} = x, ce qui suppose a = 1, si M est un message à certifier par A, on peut remplacer x = g^{r} par x = f(g^{r}, M), où f est une fonction, par exemple égale à (ou incluant) une fonction de hachage cryptographique, puis calculer b = h(x) où h est une fonction sans propriétés cryptographiques particulières, par exemple l'identité ; dans ce cas l'étape 2 ne fait plus intervenir l'entité A ; l'équation de vérification devient : f(g^{y}v^{h(x)}, M) = x ; le protocole obtenu est un protocole de signature numérique de message (dans le cas particulier où G est l'ensemble des entiers non négatifs inférieurs à n et où l'opération est la multiplication modulo n, on retrouve alors le schéma de signature électronique décrit dans le brevet européen 0 666 664).

On constate qu'à l'étape 3, l'entité A a uniquement une addition et une ou deux multiplications d'entiers à effectuer. On constate également que cette combinaison est indépendante de l'ensemble G choisi. On constate enfin que l'autre calcul (x = g^{r} ou f(g^{r})) que doit effectuer A peut l'être à l'avance. Il est donc possible de calculer un certain nombre de valeurs de g^{r} (auxquelles on applique une fonction f ou non) à l'avance, puis de les stocker dans une mémoire programmable en association avec les nombres aléatoires r correspondants.

Avec les mêmes paramètres, auxquels on ajoute une clé privée s' et une clé publique associée g', v' pour l'entité B, obtenue selon les mêmes règles que pour l'entité A avec g' = g : v' = g^{s'}, un protocole d'échange de clés peut être défini comme suit :
1. A choisit au hasard un entier r, calcule x = g^{r} et envoie x à B ; A calcule la clé commune K = v'^{r} (= g^{s'r)} ;
2. B choisit au hasard deux opérandes entiers a et b et les envoie à A ;
3. A calcule y = ar + bs et envoie y à B.
4. B vérifie que g^{y} = x^{a}v^{b}. B calcule la clé commune : K = x^{s'} (= g^{rs'})

Ce protocole permet d'une part d'échanger une clé selon le schéma de Diffie-Hellman, d'autre part d'authentifier de part et d'autre la clé échangée. La clé commune K pourrait aussi être calculée comme une fonction prédéterminée de v'^{r}.

On constate de nouveau qu'à l'étape 3, l'entité A a uniquement une addition et une ou deux multiplications d'entiers à effectuer. On constate également que cette combinaison est indépendante de l'ensemble G choisi. On constate enfin que les autres calculs que doit effectuer l'entité A peuvent l'être à l'avance. Il est donc possible de calculer un certain nombre de valeurs de x et de K à l'avance, puis de les stocker dans une mémoire programmable.

Ainsi en développant un programme ou un circuit mettant en oeuvre la seule fonction y = ar + bs (ou l'une des variantes mentionnées plus haut), on obtient une brique logicielle ou matérielle de base susceptible d'être utilisée dans des schémas cryptographiques différents, remplissant des rôles différents tels que l'authentification, l'échange de clé etc. Un schéma remplissant un rôle donné peut même être modifié pendant la durée de vie du dispositif de sécurité incluant ce programme ou ce circuit. Par exemple, il est possible de remplacer le schéma d'authentification par un autre, ou de conserver le même mais en modifiant l'ensemble ou le groupe G dans lequel les calculs sont effectués. En effet, ces modifications n'ont d'impact que sur les valeurs calculées à l'avance, mais pas sur le composant en lui-même.

La figure 1 montre schématiquement un exemple d'unité cryptographique A réalisée suivant l'invention. Cette unité consiste en une puce ayant une région 10 à laquelle l'accès est protégé par des techniques bien connues de l'homme du métier.

La région protégée 10 comporte la mémoire programmable 11 destinée à recevoir d'une part la clé secrète s de l'unité A (zone 12), et d'autre part des couples {r, g^{r}} déterminés indépendamment de s une fois que l'ensemble G et son opération de multiplication auront été définis (zone 13). La région protégée 10 comporte en outre le composant 15 servant à calculer l'entier y = ar + bs en fonction d'un entier aléatoire r reçu de la zone de mémoire 13, de la clé secrète s reçue de la zone de mémoire 12 et des deux opérandes supplémentaires a, b soumis par un module de contrôle 16.

Différentes façons de mémoriser plusieurs couples {r, g^{r}} dans la zone 13 sont possibles. Chaque valeur de r et chaque valeur de g^{r} peuvent par exemple être stockées in extenso dans une table avec une correspondance associative entre la valeur de r et la valeur de g^{r} du même couple. Avantageusement dans des microcircuits à taille mémoire limitée, un simple index est associé à chaque valeur de g^{r} de façon à économiser la place mémoire qui serait nécessaire à la mémorisation de plusieurs valeurs de r, généralement grandes. Les différentes valeurs de r sont pré-calculées au moyen d'un générateur pseudo aléatoire à partir d'une valeur germe r₀ et de l'index correspondant de façon à pré-calculer et à stocker la valeur de g^{r} pour cet index. La mémoire programmable 11 comprend alors le générateur pseudo aléatoire et initialement la valeur germe r₀ de façon à recevoir chaque valeur de r à partir de l'index correspondant en activant le générateur pseudo aléatoire sans avoir à stocker in extenso chaque valeur de r pour lui faire correspondre la valeur de g^{r} grâce à l'index.

En réponse à une requête d'authentification issue d'une entité distante B, le module de contrôle 16 commande la zone de mémoire 13 pour qu'elle délivre un entier r adressé au composant 15 ainsi que l'élément associé g^{r} de l'ensemble G, qui pourra constituer la valeur x transmise à l'entité B. Le module de contrôle 16 présente en outre au composant 15 les opérandes supplémentaires a, b reçus de l'entité B, puis communique à l'entité B l'entier y retourné par le composant. L'entité B, qui connaît la clé publique g, v, pourra alors authentifier A à l'aide de l'équation de vérification g^{y} = x^{a}v^{b}.

Dans la variante de la figure 2, l'unité A assure l'authentification de messages M. La région protégée 10 et le module de contrôle 16 sont essentiellement les mêmes que dans l'exemple de la figure 1, en fixant a = 1. La zone protégée 10 est complétée par un module de hachage 18 qui applique une fonction de hachage cryptographique prédéterminée f. Les arguments de cette fonction f sont l'élément g^{r} issu de la zone de mémoire 13 et le message à certifier M fourni par le module de contrôle 16. Le résultat x est adressé au module de contrôle 16 qui le communique à l'entité B.

Le module de hachage 18 pourrait aussi être présent dans la réalisation selon la figure 1, sans l'argument M (ou avec une valeur par défaut de cet argument), afin de produire une valeur de clé x ayant une taille spécifiée indépendamment de l'ensemble G.

On voit donc que le même circuit convient pour les deux applications.

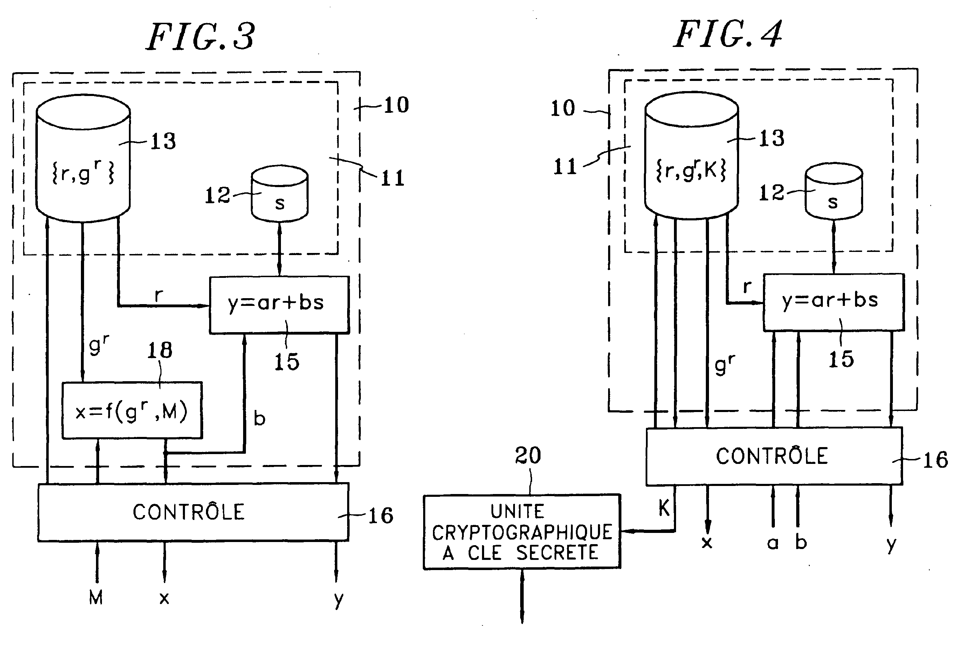

Il en est de même pour l'unité selon la figure 3, qui assure la signature de messages M, c'est-à-dire indépendamment des entités qui examineront éventuellement cette signature. Si le résultat x délivré par le module de hachage 18 se présente comme un entier, on peut le fournir au composant 15 en tant qu'opérande b. Il est aussi possible de lui appliquer préalablement une fonction h, comme indiqué précédemment.

Dans la réalisation selon la figure 4, la zone de mémoire 13 associe en outre à chaque nombre aléatoire r une clé de session secrète K déterminée en fonction de la clé publique g, v' de l'entité B (qui doit donc être connue d'avance) : K = v'^{r}. Cette clé de session K est adressée à une unité 20 de cryptographie à clé secrète fonctionnant de façon classique selon un algorithme de cryptographie symétrique, de façon à être utilisable dans une communication avec l'entité B. Celle-ci s'assure de l'intégrité de la clé secrète K à l'aide de l'équation de vérification g^{y} = x^{a}v^{b} ou de l'une de ses variantes décrites précédemment.

## Revendications

1. Procédé de réalisation d'une unité cryptographique dans un schéma de cryptographie asymétrique, ledit schéma de cryptographie asymétrique étant sélectionné en associant à une clé secrète formée par un entier s une clé publique formée par au moins un premier élément de clé publique constitué par un entier g appartenant à un ensemble G muni d'une opération de multiplication, dans lequel on
- équipe ladite unité cryptographique d'un générateur (13) de Jeux de données cryptographiques comportant une pluralité de couples de valeurs formés par un nombre entier aléatoire r et par un élément g^{r} calculé par exponentiation dudit premier élément de clé publique, **caractérisé en ce qu'**il consiste à
- équiper ladite unité cryptographique d'un composant (15) indépendant du schéma de cryptographie et adapté pour délivrer un entier y par une combinaison entre plusieurs opérandes entiers incluant ledit nombre entier aléatoire r, ladite clé secrète s et au moins un opérande supplémentaire (a, b), lesdits plusieurs opérandes et ladite combinaison étant indépendants du schéma de cryptographie,
ce qui permet à ladite unité cryptographique d'engendrer et de délivrer une valeur x fonction dudit élément g^{r} calculé et ladite valeur d'entier y.

2. Procédé selon la revendication 1, dans lequel la clé publique comprend un deuxième élément v de l'ensemble G tel que v = g^{s} ou v = g^{-s}.

3. Procédé selon la revendication 1 ou 2, dans lequel le générateur de jeux de données cryptographiques comporte une mémoire programmable (13) pour recevoir des couples {r, x} ou {r, g^{r}} calculés à l'avance.

4. Procédé selon l'une quelconque des revendications précédentes, dans lequel la combinaison effectuée par ledit composant (15) est de la forme y = ar + bs, où a et b sont deux opérandes supplémentaires.

5. Procédé selon la revendication 4, dans lequel les opérandes supplémentaires a et b sont reçus d'une unité de vérification à laquelle sont envoyés la valeur x et l'entier y.

6. Procédé selon la revendication 4, dans lequel l'une des opérations supplémentaires (a) est égale à 1.

7. Procédé selon la revendication 6, dans lequel l'ensemble G muni de l'opération de multiplication possède une structure de groupe.

8. Procédé selon la revendication 7, dans lequel on agence ledit composant (15) de façon que l'autre opérande supplémentaire (b), soit reçue d'une unité de vérification à laquelle sont envoyés la valeur x et l'entier y, et dans lequel l'obtention de la valeur x en fonction de l'élément g^{r} comporte l'application d'une fonction de hachage.

9. Procédé selon la revendication 7 ou 8 pour la réalisation d'une unité cryptographique mettant en oeuvre un protocole d'authentification de message, dans lequel on agence ledit composant (15) de façon que l'autre opérande supplémentaire (b) soit reçu d'une unité de vérification à laquelle sont envoyés la valeur x et l'entier y, et dans lequel la valeur x est une fonction de l'élément g^{r} et du contenu d'un message (M) à certifier par un dispositif incorporant l'unité cryptographique.

10. Procédé selon l'une quelconque des revendications 7 à 9 pour la réalisation d'une unité cryptographique mettant en oeuvre un protocole de signature numérique de message, dans lequel l'opérande supplémentaire b est calculé en fonction de la valeur x, et dans lequel la valeur x est une fonction de l'élément g^{r} et du contenu d'un message (M) à certifier par un dispositif incorporant l'unité cryptographique.

11. Procédé selon l'une quelconque des revendications précédentes pour la réalisation d'une unité cryptographique mettant en oeuvre un protocole d'échange de clés, dans lequel on équipe l'unité cryptographique de moyens de communication avec une autre unité cryptographique à laquelle sont envoyés la valeur x et l'entier y, ladite autre unité cryptographique étant associée à une autre clé secrète entière s', dans lequel la sélection du système de cryptographie comporte l'association à la clé secrète s' d'une clé publique composée de l'élément g et d'un autre élément v' de l'ensemble G tel que v' = g^{s'}, dans lequel chaque jeu de données cryptographiques produit par ledit générateur (13) comprend, outre le nombre aléatoire r et ladite valeur x, une clé commune K dépendant de l'élément v'^{r} de l'ensemble G, qui n'est pas transmise à ladite autre unité cryptographique.

12. Procédé selon la revendication 11, dans lequel le générateur de jeux de données cryptographiques comporte une mémoire programmable (13) pour recevoir des triplets {r, x, K} ou {r, g^{r}, v'^{r}} calculés à l'avance.

## Claims

1. Method of producing a cryptographic unit in an asymmetric cryptography scheme, said asymmetric cryptography scheme being selected by associating with a secret key formed by an integer s a public key formed by at least one first public key element consisting of an integer g belonging to a set G furnished with a multiplication operation, in which
- said cryptographic unit is equipped with a generator (13) of cryptographic data suites comprising a plurality of pairs of values formed by a random integer number r and by an element g^{r} calculated by exponentiation of said first public key element, **characterized in that** it consists in
- equipping said cryptographic unit with a component (15) independent of the cryptography scheme and adapted for delivering an integer y through a combination between several integer operands including said random integer number r, said secret key s and at least one further operand (a, b), said several operands and said combination being independent of the cryptography scheme,
thereby enabling said cryptographic unit to generate and deliver a value x dependent on said calculated element g^{r} and said integer value y.

2. Method according to Claim 1, in which the public key comprises a second element v of the set G such that v = g^{s} or v = g^{-s}.

3. Method according to Claim 1 or 2, in which the generator of cryptographic data suites comprises a programmable memory (13) for receiving pairs {r, x} or {r, g^{r}} calculated in advance.

4. Method according to any one of the preceding claims, in which the combination performed by said component (15) is of the form y = ar + bs, where a and b are two further operands.

5. Method according to Claim 4, in which the further operands a and b are received from a verification unit to which the value x and the integer y are sent.

6. Method according to Claim 4, in which one of the further operands (a) is equal to 1.

7. Method according to Claim 6, in which the set G furnished with the multiplication operation possesses a group structure.

8. Method according to Claim 7, in which said component (15) is devised in such a way that the other further operand (b) is received from a verification unit to which the value x and the integer y are sent, and in which the obtaining of the value x as a function of the element g^{r} comprises the application of a hash function.

9. Method according to Claim 7 or 8 for the production of a cryptographic unit implementing a message authentication protocol, in which said component (15) is devised in such a way that the other further operand (b) is received from a verification unit to which the value x and the integer y are sent, and in which the value x is a function of the element g^{r} and of the content of a message (M) to be certified by a device incorporating the cryptographic unit.

10. Method according to any one of Claims 7 to 9 for the production of a cryptographic unit implementing a digital message signature protocol, in which the further operand b is calculated as a function of the value x, and in which the value x is a function of the element g^{r} and of the content of a message (M) to be certified by a device incorporating the cryptographic unit.

11. Method according to any one of the preceding claims for the production of a cryptographic unit implementing a key exchange protocol, in which the cryptographic unit is equipped with means of communication with another cryptographic unit to which the value x and the integer y are sent, said other cryptographic unit being associated with another integer secret key s', and in which the selection of the cryptography system comprises the association with the secret key s' of a public key composed of the element g and of another element v' of the set G such that v' = g^{s'}, in which each cryptographic data suite produced by said generator (13) comprises, as well as the random number r and said value x, a common key K dependent on the element v^{'r} of the set G, which is not transmitted to said other cryptographic unit.

12. Method according to Claim 11, in which the generator of cryptographic data suites comprises a programmable memory (13) for receiving triplets {r, x, K} or {r, g^{r}, v^{'r}} calculated in advance.

## Patentansprüche

1. Verfahren zur Verwirklichung einer kryptographischen Einheit in einem asymmetrischen Kryptographieschema, wobei das asymmetrische Kryptographieschema gewählt wird durch Zuweisen eines öffentlichen Schlüssels, der durch wenigstens ein erstes öffentliches Schlüsselelement gebildet ist, das durch eine ganze Zahl g gebildet ist, die zu einer Gesamtheit G gehört, die mit einer Multiplikationsoperation versehen ist, zu einem geheimen Schlüssel, der durch eine ganze Zahl s gebildet ist, wobei
- die kryptographische Einheit mit einem Generator (13) für Sätze kryptographischer Daten versehen wird, die mehrere Wertepaare enthalten, die durch eine ganzzahlige Zufallszahl r und durch ein Element g^{r}, das durch Potenzieren des ersten öffentlichen Schlüsselelements berechnet wird, gebildet sind, **dadurch gekennzeichnet, dass** es darin besteht:
- die kryptographische Einheit mit einer von dem kryptographischen Schema unabhängigen Komponente (15) zu versehen, die dazu ausgelegt ist, eine ganze Zahl y durch eine Kombination aus mehreren ganzzahligen Operanden einschließlich der ganzzahligen Zufallszahl r, aus dem geheimen Schlüssel s und aus wenigstens einem zusätzlichen Operanden (a, b) zu liefern, wobei die mehreren Operanden und die Kombination von dem Kryptographieschema unabhängig sind,
was der Kryptographieeinheit ermöglicht, einen Wert x als Funktion des berechneten Elements g^{r} und des ganzzahligen Werts y zu erzeugen und zu liefern.

2. Verfahren nach Anspruch 1, wobei der öffentliche Schlüssel ein zweites Element v der Gesamtheit G enthält, derart, dass v = g^{s} oder v = g^{-s} ist.

3. Verfahren nach Anspruch 1 oder 2, wobei der Generator für kryptographische Datensätze einen programmierbaren Speicher (13) enthält, um im Voraus berechnete Paare {r, x} oder {r, g^{r}} zu empfangen.

4. Verfahren nach einem der vorhergehenden Ansprüche, wobei die von der Komponente (15) ausgeführte Kombination die Form y = ar + bs hat, wobei a und b zwei zusätzliche Operanden sind.

5. Verfahren nach Anspruch 4, wobei die zusätzlichen Operanden a und b von einer Verifikationseinheit empfangen werden, zu der der Wert x und die ganze Zahl y geschickt werden.

6. Verfahren nach Anspruch 4, wobei einer der zusätzlichen Operanden (a) gleich 1 ist.

7. Verfahren nach Anspruch 6, wobei die Gesamtheit G, die mit der Multiplikationsoperation versehen ist, eine Gruppenstruktur besitzt.

8. Verfahren nach Anspruch 7, wobei die Komponente (15) in der Weise ausgelegt wird, dass der andere zusätzliche Operand (b) von einer Verifikationseinheit empfangen wird, zu der der Wert x und die ganze Zahl y geschickt werden und in der das Erhalten des Wertes x als Funktion des Elements g^{r} die Anwendung einer Hash-Funktion enthält.

9. Verfahren nach Anspruch 7 oder 8 für die Verwirklichung einer kryptographischen Einheit, die ein Nachrichtenauthentifizierungsprotokoll ausführt, in dem die Komponente (15) in der Weise ausgelegt wird, dass der andere zusätzliche Operand (b) von einer Verifikationseinheit empfangen wird, zu der der Wert x und die ganze Zahl y geschickt werden und in der der Wert x eine Funktion des Elements g^{r} und des Inhalts einer Nachricht (M) ist, die durch eine die kryptographische Einheit enthaltende Vorrichtung zu beglaubigen ist.

10. Verfahren nach einem der Ansprüche 7 bis 9 für die Verwirklichung einer kryptographischen Einheit, die ein Protokoll für die digitale Signatur einer Nachricht ausführt, in der der zusätzliche Operand (b) als Funktion des Wertes x berechnet wird und in der der Wert x eine Funktion des Elements g^{r} und des Inhalts einer Nachricht (M) ist, die durch eine die kryptographische Einheit enthaltende Vorrichtung beglaubigt werden soll.

11. Verfahren nach einem der vorhergehenden Ansprüche für die Verwirklichung einer kryptographischen Einheit, die ein Schlüsselaustauschprotokoll ausführen soll, wobei die kryptographische Einheit mit Mitteln für die Kommunikation mit einer anderen kryptographischen Einheit versehen wird, zu der der Wert x und die ganze Zahl y geschickt werden, wobei die andere kryptographische Einheit einem anderen ganzzahligen geheimen Schlüssel s' zugeordnet ist, wobei die Auswahl des kryptographischen Systems das Zuordnen eines öffentlichen Schlüssels, der aus dem Element g und einem anderen Element v' der Gesamtheit G gebildet ist, derart, dass v' = g^{s}' gilt, zu dem geheimen Schlüssel s' enthält, wobei jeder Satz kryptographischer Daten, der durch den Generator (13) erzeugt wird, außer der Zufallszahl r und dem Wert x einen gemeinsamen Schlüssel K enthält, der von dem Element v'^{r} der Gesamtheit G abhängt und der nicht an die andere kryptographische Einheit übertragen wird.

12. Verfahren nach Anspruch 11, wobei der Generator für Sätze kryptographischer Daten einen programmierbaren Speicher (13) enthält, um im Voraus berechnete Tripletts {r, x, K} oder {r, g^{r}, v'^{r}} zu empfangen.
